# EUROPÄISCHE PATENTSCHRIFT

(11) **EP 3 599 628 B1**
(45) Veröffentlichungstag und Bekanntmachung des Hinweises auf die Patenterteilung: **02.12.2020**
(21) Anmeldenummer: 19174868.0
(22) Anmeldetag: 16.05.2019
(51) Int. Cl.: H01H 13/85, G06F 3/01, H01L 41/193

(54) **BEDIENVORRICHTUNG FÜR EIN KRAFTFAHRZEUG, KRAFTFAHRZEUG MIT EINER BEDIENVORRICHTUNG UND VERFAHREN ZUM BETREIBEN EINER BEDIENVORRICHTUNG**
OPERATING DEVICE FOR A MOTOR VEHICLE, MOTOR VEHICLE WITH AN OPERATING DEVICE AND METHOD FOR OPERATING AN OPERATING DEVICE
DISPOSITIF DE COMMANDE POUR UN VÉHICULE AUTOMOBILE, VÉHICULE AUTOMOBILE DOTÉ D'UN DISPOSITIF DE COMMANDE ET PROCÉDÉ DE FONCTIONNEMENT D'UN DISPOSITIF DE COMMANDE

(30) Priorität: 27.07.2018 DE 102018212618
(43) Veröffentlichungstag der Anmeldung: 29.01.2020
(73) Patentinhaber: Volkswagen Aktiengesellschaft, 38440 Wolfsburg (DE)
(72) Erfinder: Meierling, Klaus, 44879 Bochum (DE)

(56) Entgegenhaltungen:
- WO-A1-2014/093741
- DE-A1-102010 026 910
- US-A1- 2003 067 245
- US-A1- 2010 079 309

## Beschreibung

Die Erfindung betrifft eine Bedienvorrichtung für ein Kraftfahrzeug, ein Kraftahrzeug mit einer solchen Bedienvorrichtung sowie ein Verfahren zum Betreiben einer derartigen Bedienvorrichtung.

Es ist an sich bekannt, Bedienelemente, beispielsweise in Form von Tasten oder dergleichen, vorzusehen, an denen eine haptische Rückmeldung ausgegeben werden kann.

So zeigt die US 2007/0152974 A1 beispielsweise einen Knopf, an welchem eine haptische Rückmeldung ausgegeben werden kann. Unter dem Knopf ist ein elektroaktives Polymer angeordnet, wobei unter dem elektroaktiven Polymer noch ein Metalldom angeordnet ist, um eine klickartige haptische Rückmeldung beim Betätigen des Knopfs erzeugen zu können. Durch das elektroaktive Polymer kann der Steifigkeit des Metalldoms eine künstliche Steifigkeit hinzugefügt werden, um die haptische Rückmeldung am Knopf zu beeinflussen.

Die DE 2014 219 316 A1 zeigt ein Bedienelement, unter welchem eine Schnappscheibe angeordnet ist. Wenn das Bedienelement weit genug in Richtung der Schnappscheibe verschoben worden ist, verursacht dies eine spontane Verformung der Schnappscheibe, infolgedessen zwei Kontakte miteinander kontaktiert werden.

Aus der DE10 2010 026 910 A1 ist ein Verfahren zum Steuern und Auslesen eines Bedienfeldes mit einer Vielzahl von Funktionsbereichen bekannt, über das abhängig von einer manuellen Krafteinwirkung pro Funktionsbereich eine zugeordnete Schaltfunktion schaltbar und dabei eine haptische Rückmeldung gebbar ist. Wird eine manuelle Krafteinwirkung nicht genau für einen Funktionsbereich, sondern für eine Vielzahl der Funktionsbereiche erkannt, kann ein Sperraktuator aktiviert werden, um den jeweiligen Funktionsbereich mechanisch zu sperren. Der Sperraktuator kann mittels einer geeigneten elektromagnetischen Vorrichtung ausgebildet sein und beispielsweise mittels Bestromen betätigt werden. Insbesondere kann damit eine Sperrklinke des Sperraktuators zwischen einem aktivierten und einem nicht aktivierten Zustand hin- und her geschaltet werden. Diese Druckschrift wurde zur Formulierung des Oberbegriffs von Patentanspruch 1 herangezogen. Aus der US 2010/079309 A1 sind konfigurierbare Tasten für elektronische Geräte bekannt, wobei eine konfigurierbare Taste ein Tastenelement aufweisen kann, das sich relativ zu einem Gerätegehäuse bewegt, wenn ein Schalter aktiviert werden soll. Wenn mittels eines Berührungssensors erkannt wird, dass ein Finger eines Benutzers einen bestimmten Teil des Tastenelements berührt und der Kontakt mit diesem Teil des Tastenelements im Allgemeinen unbeabsichtigt ist, so kann ein Aktuator verwendet werden, um die Bewegung des Tastenelements relativ zu einem Gerätegehäuse zu verhindern. Zu diesem Zweck werden Solenoids eingesetzt.

Aus der US 2009/0132093 A1 ist es bekannt, eine taktile Konfiguration und/oder eine visuelle Erscheinung eines Geräts zu verbessern, indem elektro-aktive Polymere eingesetzt werden, die die 3D-Form ändern.

Aus der US 2003/0067245 A1 ist es bekannt, elektroaktive Polymersysteme einzusetzen, um eine Umwandlung zwischen elektrischer Energie und mechanischer Energie zwischen einem Master und einem Slave vorzunehmen.

Aus WO 2014/093741 A1 ist es bekannt, elektro-aktive Polymersysteme statt elektromagnetischer Aktoren einzusetzen.

Es ist die Aufgabe der vorliegenden Erfindung, eine Lösung bereitzustellen, mittels welcher auf besonders einfache Weise eine Erzeugung einer haptischen Rückmeldung an einem Bedienelement gesteuert werden kann.

Die Aufgabe wird durch eine Bedienvorrichtung für ein Kraftfahrzeug sowie durch ein Verfahren zum Betreiben einer derartigen Bedienvorrichtung mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Die erfindungsgemäße Bedienvorrichtung für ein Kraftfahrzeug umfasst ein Bedienelement, welches durch eine Kraftausübung absenkbar ist. Des Weiteren umfasst die Bedienvorrichtung eine unter dem Bedienelement angeordnete Schnappscheibe zum Ausüben einer haptischen Rückmeldung am Bedienelement, wenn die Schnappscheibe durch Absenken des Bedienelements verformt wird. Eine solche Schnappscheibe wird üblicherweise auch als Knackfeder bezeichnet. Die Schnappscheibe kann beispielsweise aus einem Federstahl bestehen, wobei der Federstahl so geprägt ist, dass er einen stabilen und einen metastabilen Zustand aufweist. Durch Krafteinwirkung wird er verbogen, bis er plötzlich durch Beulen den metastabilen Zustand durchläuft. Das plötzliche Umspringen an diesem Punkt erzeugt üblicherweise ein laut vernehmbares Knackgeräusch. Lässt die Kraftausübung wieder nach, erfolgt das Zurückschnappen, bei dem nochmals ein lautes Knacken erzeugt wird. So ist es mittels der Schnappscheibe also möglich, am Bedienelement eine haptische und auch eine akustische Rückmeldung auszugeben, wenn das Bedienelement soweit abgesenkt wird, dass es die darunter angeordnete Schnappscheibe durch entsprechende Kraftausübung verformt. Zudem gibt die Schnappscheibe auch eine haptische und akustische Rückmeldung aus, wenn die Kraftausübung am Bedienelement aufgehoben wird, infolgedessen das Bedienelement - beispielsweise noch unterstützt durch eine Rückstellfeder - in eine Ausgangslage zurückkehrt. Dabei verformt sich die Schnappscheibe wieder in ihren stabilen Ausgangszustand.

Unter dem Bedienelement und neben der Schnappscheibe ist zudem ein Blockierkörper aus einem elektroaktiven Polymer angeordnet, dessen Form in Abhängigkeit von einer angelegten elektrischen Spannung so veränderbar ist, das ein Absenken des Bedienelements blockiert oder ein Absenken des Bedienelements zum Verformen der Schnappscheibe ermöglicht wird. Je nachdem wie der Blockierkörper also mit einer Spannung beaufschlagt wird, weist dieser entweder eine solche Form auf, dass der Blockierkörper das Absenken des Bedienelements blockiert, das Bedienelement also nicht abgesenkt werden kann, oder zwischen dem Blockierkörper und dem Bedienelement so viel Platz vorhanden ist, dass das Bedienelement zum Verformen der Schnappscheibe in Richtung der Schnappscheibe unter Verformung der Schnappscheibe abgesenkt werden kann. Des Weiteren umfasst die Bedienvorrichtung eine Erfassungseinrichtung zum Erfassen einer Berührposition eines Fingers am Bedienelement sowie eine Steuereinrichtung, welche dazu eingerichtet ist, eine Spannung am Blockierkörper in Abhängigkeit von der erfassten Berührposition des Fingers einzustellen.

Mittels des Blockierkörpers ist es also durch entsprechende Aufprägung einer Spannung oder durch vollständiges Weglassen der elektrischen Spannung möglich, dem Bedienelement, bei welchem es sich beispielsweise um eine Tastenkappe handeln kann, so viel Freiraum zu geben, dass mittels des Bedienelements die darunter liegende Schnappscheibe, welche auch als Knackscheibe verstanden werden kann, zum Kollabieren gebracht werden kann und so ein entsprechendes Schaltgefühl erzeugt wird. Mittels der Erfassungseinrichtung ist es möglich, eine jeweilige Berührposition eines Fingers eines Benutzers am Bedienelement zu erfassen, wobei die Steuereinrichtung je nach erfasster Berührposition dem Blockierkörper eine entsprechende Spannung aufprägen oder die Spannung vollständig wegnehmen kann, um entweder ein Absenken des Bedienelements unter Verformung der Schnappscheibe zu ermöglichen oder zu verhindern.

Somit wird also eine besonders einfach aufgebaute Bedienvorrichtung für ein Kraftfahrzeug bereitgestellt, mittels welcher auf besonders einfache Weise die Erzeugung einer haptischen Rückmeldung am Bedienelement in Abhängigkeit von einer erfassten Berührposition eines Fingers am Bedienelement gesteuert werden kann.

Eine vorteilhafte Ausführungsform der Erfindung sieht vor, dass die Form des Blockierkörpers bei einer angelegten Spannung das Absenken des Bedienelements zum Verformen der Schnappscheibe ermöglicht und bei nicht angelegter Spannung das Absenken des Bedienelements blockiert. Mit anderen Worten muss also eine bestimmte Spannung am Blockierkörper aufgeprägt bzw. angelegt werden, damit dieser sich bezogen auf eine Betätigungsrichtung bzw. Absenkrichtung des Bedienelements soweit zusammenzieht, dass zwischen dem Blockierkörper und dem Bedienelement genug Platz entsteht, dass das Bedienelement in Richtung der Schnappscheibe abgesenkt werden kann. Bei nicht angelegter bzw. nicht aufgeprägter Spannung ist die Form des Blockierkörpers derart, dass dieser von unten direkt an dem Bedienelement anliegt und dadurch verhindert, dass das Bedienelement abgesenkt werden kann. Der Vorteil hierbei ist, dass im spannungsfreien und somit im stromlosen Zustand immer sichergestellt werden kann, dass der Blockierkörper ein Absenken des Bedienelements zuverlässig verhindert. Es muss also nicht permanent eine Spannung am Blockierkörper anliegen, damit dieser das Absenken des Bedienelements verhindert.

Eine weitere vorteilhafte Ausführungsform der Erfindung sieht vor, dass das Bedienelement zumindest ein Symbol aufweist, wobei die Steuereinrichtung dazu eingerichtet ist, die Spannung nur dann zum Ermöglichen des Absenkens des Bedienelements entsprechend einzustellen, wenn der Finger das Symbol berührt. Bei dem Bedienelement kann es sich wie gesagt beispielsweise um einen Taster bzw. eine Taste handeln, wobei das Symbol beispielsweise dauerhaft zum Beispiel in Form einer Lackierung oder einer anderweitigen permanenten Kennzeichnung am Bedienelement vorgesehen sein kann. Es ist auch möglich, dass es sich bei dem Bedienelement beispielsweise um eine berührungssensitive Anzeigeeinrichtung, wie beispielsweise einen Touchscreen oder dergleichen handelt, wobei in dem Fall das zumindest eine Symbol eingeblendet werden kann. Dadurch, dass die Steuereinrichtung dazu eingerichtet ist, die Spannung nur dann zum Ermöglichen des Absenkens des Bedienelements entsprechend am Blockierkörper einzustellen, wenn der Finger das Symbol berührt, kann sichergestellt werden, dass eine der Betätigung des Bedienelements zugehörige Funktion auch nur dann ausgelöst wird, wenn der betreffende Benutzer mit seinem Finger das Symbol berührt. Berührt ein Benutzer mit seinem Finger beispielsweise das Bedienelement an einer anderen Stelle, wo das besagte Symbol nicht vorhanden ist, so können zum Beispiel Fehlauslösungen von Funktionen und auch damit einhergehende Rückmeldungen durch die Schnappscheibe unterbunden werden.

Erfindungsgemäß ist es vorgesehen, dass das Bedienelement wenigstens zwei Symbole aufweist, wobei die Steuereinrichtung dazu eingerichtet ist, die Spannung oszillierend dem Blockierkörper aufzuprägen, um das Bedienelement in Vibrationen zu versetzen, wenn erfasst wird, dass der Finger zwischen den Symbolen angeordnet ist. Wird dem Blockierkörper oszillierend eine Spannung aufgeprägt, so bewirkt dies, dass der Blockierkörper entsprechend oszillierend expandiert und sich zusammenzieht, infolgedessen eine Vibration am Bedienelement ausgelöst wird, welche ein Benutzer dann mit seinem Finger spüren kann. Die Spannung wird dabei vorzugsweise nur so groß gewählt und so schnell oszillierend variiert, dass der Benutzer das Bedienelement nicht so weit runterdrücken kann, dass die Schnappscheibe verformt wird. Dadurch kann dem Benutzer auf einfache Weise kenntlich gemacht werden, dass er mit seinem Finger gerade weder das eine noch das andere Symbol berührt hat. Fehlauslösungen von den Symbolen zugeordneten Funktionen können dadurch vermieden werden. Denn der Benutzer wird dazu angehalten, seinen Finger entsprechend exakt auf einem der beiden Symbole zu platzieren, bevor er das Bedienelement an der betreffenden Stelle in Richtung der Schnappscheibe absenken kann.

In weiterer vorteilhafter Ausgestaltung der Erfindung ist es vorgesehen, dass die Erfassungseinrichtung dazu ausgelegt ist, die Berührposition des Fingers am Bedienelement kapazitiv zu erfassen. Dadurch ist es auf besonders einfache Weise möglich, die Berührposition des Fingers am Bedienelement zuverlässig und exakt zu erfassen.

Eine weitere vorteilhafte Ausführungsform der Erfindung sieht vor, dass die Erfassungseinrichtung neben dem Blockierkörper zwei weitere solcher Blockierkörper aufweist, wobei alle drei Blockierkörper bei nicht aufgeprägter Spannung unterseitig am Bedienelement anliegen und bei einer Kraftausübung auf das Bedienelement eine Spannung erzeugen, wobei die Steuereinrichtung dazu eingerichtet ist, anhand der erzeugten Spannungen mittels einer Triangulation die Berührposition des Fingers am Bedienelement zu erfassen. Auf diese Weise ist es allein mittels der Blockierkörper und der Steuereinrichtung möglich, jeweilige Berührpositionen von Fingern am Bedienelement zu erfassen. In dem Fall wäre es beispielsweise auch möglich, ohne jegliche weitere Sensorik, beispielsweise kapazitiver Sensorik, Drucksensoren oder dergleichen, die Berührposition des Fingers am Bedienelement zu ermitteln.

In weiterer vorteilhafter Ausgestaltung der Erfindung ist es vorgesehen, dass der Blockierkörper einen elastischen und elektrisch isolierenden Silikonkörper aufweist, welcher zwischen zwei als Elektroden dienenden elektrisch leitenden Silikonelastomerschichten angeordnet ist. Letztere können einfach mit einer Spannung beaufschlagt werden, infolgedessen sich die beiden Silikonelastomerschichten anziehen und den elastischen elektrisch isolierenden Silikonkörper zwischen sich zusammendrücken. Mit anderen Worten bildet der Blockierkörper also eine Art verformbaren Kondensator aus, bei welchem durch entsprechende Spannungsbeaufschlagung bzw. Spannungswegnahme die Form ganz leicht verändert werden kann.

Das erfindungsgemäße Kraftfahrzeug umfasst die erfindungsgemäße Bedienvorrichtung oder eine vorteilhafte Ausführungsform der erfindungsgemäßen Bedienvorrichtung.

Bei dem erfindungsgemäßen Verfahren zum Betreiben der erfindungsgemäßen Bedienvorrichtung oder einer vorteilhaften Ausführungsform der erfindungsgemäßen Bedienvorrichtung wird mittels der Steuereinrichtung eine Spannung am Blockierkörper in Abhängigkeit von einer mittels der Erfassungseinrichtung erfassten Berührposition des Fingers eingestellt, um ein Absenken des Bedienelements zu blockieren oder ein Absenken des Bedienelements zum Verformen der Schnappscheibe zu ermöglichen. Vorteilhafte Ausgestaltungen der erfindungsgemäßen Bedienvorrichtung sind als vorteilhafte Ausgestaltungen des erfindungsgemäßen Verfahrens und umgekehrt anzusehen, wobei die Bedienvorrichtung insbesondere Mittel zur Durchführung der Verfahrensschritte aufweist. Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination sondern auch in anderen Kombinationen oder in Alleinstellung verwendbar, ohne den Rahmen der Erfindung zu verlassen.

Die Zeichnung zeigt in:

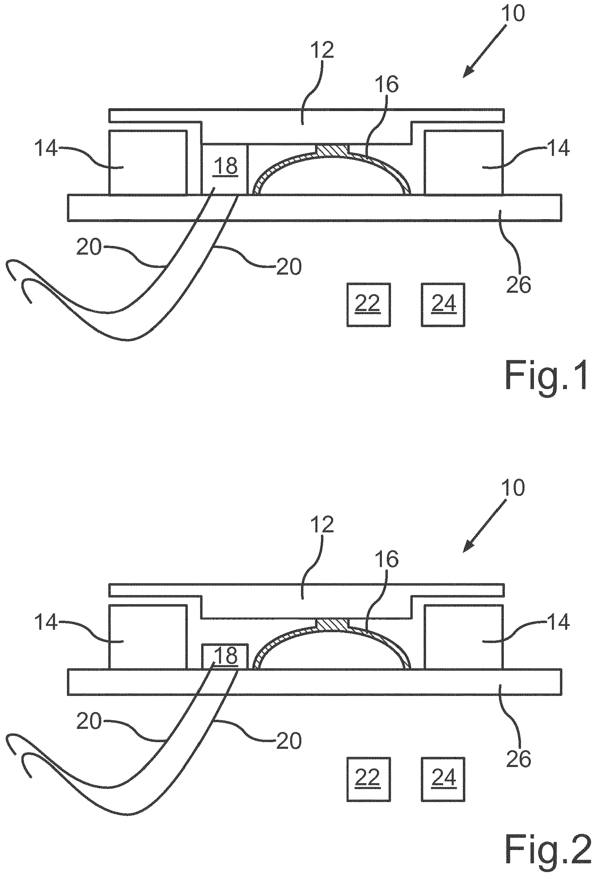

- Fig. 1: eine schematische Darstellung einer Bedienvorrichtung für ein Kraftfahrzeug, welche ein Bedienelement aufweist, das durch eine Kraftausübung absenkbar ist, wobei unter dem Bedienelement eine Schnappscheibe zum Ausüben einer haptischen Rückmeldung und daneben noch ein Blockierkörper zum Blockieren einer Absenkbewegung des Bedienelements vorgesehen ist, welche eine Absenkung des Bedienelements blockiert; und in
- Fig. 2: eine weitere schematische Darstellung der Bedienvorrichtung, wobei durch Aufbringung einer elektrischen Spannung am Blockierkörper dieser so verformt worden ist, dass das Bedienelement in Richtung der Schnappscheibe abgesenkt werden kann.

In den Figuren sind gleiche oder funktionsgleiche Elemente mit den gleichen Bezugszeichen versehen worden.

Eine Bedienvorrichtung 10 für ein hier nicht dargestelltes Kraftfahrzeug ist in einer schematischen Seitenansicht in Fig. 1 gezeigt. Die Bedienvorrichtung 10 umfasst ein Bedienelement 12, welches durch eine Kraftausübung absenkbar ist. Bei dem Bedienelement 12 kann es sich beispielsweise um eine Taste auf einer Mittelkonsole des Kraftfahrzeugs oder um eine beliebige andere Taste an anderen Stellen im Fahrzeuginnenraum das Kraftfahrzeugs handeln.

Das Bedienelement 12 ist über entsprechende Führungen 14 so geführt und gelagert, dass das Bedienelement 12 translatorisch von der hier gezeigten Stellung aus nach unten abgesenkt werden kann, indem eine entsprechende Kraft mit einem oder mehreren Fingern von oben auf das Bedienelement 12 ausgeübt wird. Unter dem Bedienelement 12 ist zudem noch eine Schnappscheibe 16 angeordnet, welche in mechanisch unbelastetem Zustand kuppelförmig bzw. domförmig nach oben - also in Richtung des Bedienelements 12 - gewölbt ist.

Die Schnappscheibe 16 liegt direkt unterseitig an dem Bedienelement 12 an. Ebenfalls unter dem Bedienelement 12 und neben der Schnappscheibe 16 ist zudem noch ein Blockierkörper 18 aus einem elektroaktiven Polymer angeordnet. Die Form des Blockierkörpers 18 kann in Abhängigkeit von einer angelegten elektrischen Spannung so verändert werden, dass das Absenken des Bedienelements 12 blockiert oder ein Absenken des Bedienelements 12 zum Verformen der Schnappscheibe 16 ermöglicht wird. Vorliegend sind schematisch noch zwei Drähte 20 eingezeichnet, die mit dem Blockierkörper 18 elektrisch leitend verbunden sind, sodass mittels diesen dem Blockierkörper 18 eine elektrische Spannung aufgeprägt werden kann.

Die Bedienvorrichtung 10 umfasst zudem noch eine hier nur schematisch angedeutete Erfassungseinrichtung 22 zum Erfassen einer Berührposition eines Fingers am Bedienelement 12. Mittels der Erfassungseinrichtung 22 kann insbesondere ermittelt werden, wo ein Benutzer mit seinem Finger das Bedienelement 12 an einer von der Schnappscheibe 16 abgewandten Oberseite berührt. Des Weiteren umfasst die Bedienvorrichtung 10 noch eine Steuereinrichtung 24, welche dazu eingerichtet ist, eine Spannung am Blockierkörper 18 in Abhängigkeit von einer momentan mittels der Erfassungseinrichtung 22 erfassten Berührposition des Fingers einzustellen.

Der Blockierkörper 18 kann beispielsweise einen hier nicht näher dargestellten elastischen elektrisch isolierenden Silikonkörper aufweisen, welcher zwischen zwei als Elektroden dienenden elektrisch leitenden Silikonelastomerschichten angeordnet ist. Letztere sind dann mit den jeweiligen Drähten 20 elektrisch leitend verbunden. Wird an die elektrisch leitenden Silikonelastomerschichten eine Spannung angelegt, so ziehen sich die als Elektroden fungierenden Silikonelastomerschichten gegenseitig an, infolgedessen der dazwischen angeordnete Silikonkörper zusammengedrückt wird.

Im vorliegend beschriebenen Ausführungsbeispiel weist der Blockierkörper 18 bei nicht angelegter Spannung die hier gezeigte Form auf, bei welcher zwischen dem Blockierkörper 18 und dem Bedienelement 12 kein Spalt besteht. Mit anderen Worten liegt also der Blockierkörper 18 bei keiner Spannungsbeaufschlagung unterseitig an dem Bedienelement 12 an und verhindert dadurch ein Absenken des Bedienelements 12. Sobald eine Spannung an den Blockierkörper 18 angelegt wird, zieht dieser sich so zusammen, dass zwischen dem Blockierkörper 18 und dem Bedienelement 12 ein Zwischenraum entsteht, infolgedessen das Bedienelement 12 in Richtung der Schnappscheibe 16 abgesenkt werden kann.

In Fig. 2 ist die Bedienvorrichtung 10 in einer weiteren schematischen Seitenansicht gezeigt, wobei der Blockierkörper 18 mit einer Spannung beaufschlagt worden ist, infolgedessen dieser soweit zusammengedrückt worden ist, dass das Bedienelement 12 nun in Richtung der Schnappscheibe 16 abgesenkt werden kann. Die beiden Führungen 14, die Schnappscheibe 16 und der Blockierkörper 18 können beispielsweise auf einem Halter 26 in Form einer Platte oder dergleichen angeordnet sein. Somit stützen sich die Schnappscheibe 16 und auch der Blockierkörper 18 nach unten ab. Wird das Bedienelement 12 weit genug nach unten gedrückt, wird die Schnappscheibe 16 soweit verbogen, bis diese durch Beulen umgestülpt wird und einen metastabilen Zustand einnimmt. Dabei erfolgt ein plötzliches Umspringen in diesen metastabilen Zustand, was ein lautes Knackgeräusch erzeugt. Wird die Kraftausübung wieder aufgehoben, schnappt die Schnappscheibe 16 wieder in die hier gezeigte stabile Form zurück, bei dem nochmals ein lautes Knacken erzeugt wird. Mittels der Schnappscheibe 16 kann so also ein haptisches und ein akustisches Feedback ausgegeben werden - und zwar einmal bei Herunterdrücken des Bedienelements 12 und einmal wieder beim Loslassen des Bedienelements 12. Dabei kann die Schnappscheibe 16 alleine dafür sorgen, dass das Bedienelement 12 beim Loslassen wieder nach oben gedrückt wird. Es ist auch möglich, dass dieser Vorgang noch durch eine hier nicht dargestellte Rückstellfeder unterstützt wird, die eine Kraft nach oben auf das Bedienelement 12 ausübt.

Das Bedienelement 12 kann beispielsweise ein Symbol aufweisen, welches eine Funktion kennzeichnet, die durch Betätigen des Bedienelements 12 ausgelöst werden kann. Die Steuereinrichtung 24 ist dazu eingerichtet, die Spannung nur dann zum Ermöglichen des Absenkens des Bedienelements 12 entsprechend am Blockierkörper 18 einzustellen, wenn der Finger das Symbol berührt. Ist dies nicht der Fall, wird ein Herunterdrücken des Bedienelements 12 verhindert. Fehlauslösungen von dem betreffenden Symbol zugeordneten Funktionen können so verhindert werden, wenn ein Benutzer zwar das Bedienelement 12 versucht herunterzudrücken, dabei jedoch das Symbol nicht berührt. Auch ist es möglich, dass das Bedienelement 12 beispielsweise zwei Symbole aufweist, wobei die Steuereinrichtung 24 dazu eingerichtet sein kann, die Spannung oszillierend dem Blockierkörper 18 aufzuprägen, um das Bedienelement 12 in Vibration zu versetzen, wenn erfasst wird, dass der Finger eines Benutzers zwischen den Symbolen angeordnet ist. So kann ein Benutzer auf einfache Weise darüber in Kenntnis gesetzt werden, dass er mit seinem Finger weder das eine noch das andere Symbol exakt berührt. Dadurch können Fehlauslösungen von den Symbolen zugeordneten Funktionen vermieden werden, da der Benutzer direkt über den Umstand in Kenntnis gesetzt wird, dass er keines der Symbole exakt ausgewählt bzw. berührt hat.

Die Erfassungseinrichtung 22 kann beispielsweise die Berührposition des Fingers am Bedienelement 12 kapazitiv erfassen. Alternativ oder zusätzlich ist es auch möglich, dass die Erfassungseinrichtung 22 neben dem hier dargestellten Blockierkörper 18 zwei weitere solcher Blockierkörper aufweist, wobei dann diese drei Blockierkörper 18 bei nicht aufgeprägter Spannung unterseitig am Bedienelement 12 anliegen und bei einer Kraftausübung auf das Bedienelement 12 - also beim Zusammendrücken der Blockierkörper - eine Spannung erzeugen.

Die Steuereinrichtung 24 ist in diesem Fall dazu eingerichtet anhand der erzeugten Spannungen mittels einer Triangulation die Berührposition des Fingers am Bedienelement 12 zu erfassen. So ist es auch ohne weitere Sensorik möglich, eine gewisse Kraftbeaufschlagung auf das Bedienelement 12 vorausgesetzt, allein mittels der besagten drei Blockierkörper 18 und der Steuereinrichtung 24 eine jeweilige Berührposition eines Fingers am Bedienelement 12 zu erfassen.

### Bezugszeichenliste

- 10: Bedienvorrichtung
- 12: Bedienelement
- 14: Führungen für das Bedienelement
- 16: Schnappscheibe
- 18: Blockierkörper
- 20: Drähte
- 22: Erfassungseinrichtung
- 24: Steuereinrichtung
- 26: Träger

## Patentansprüche

1. Bedienvorrichtung (10) für ein Kraftfahrzeug, umfassend
- ein Bedienelement (12), welches durch eine Kraftausübung absenkbar ist;
- eine unter dem Bedienelement (12) angeordnete Schnappscheibe (16) zum Ausüben einer haptischen Rückmeldung am Bedienelement (12), wenn die Schnappscheibe (16) durch Absenken des Bedienelements (12) verformt wird;
- ein unter dem Bedienelement (12) und neben der Schnappscheibe (16) angeordneter Blockierkörper (18), der in Abhängigkeit von einer angelegten elektrischen Spannung so veränderbar ist, dass ein Absenken des Bedienelements (12) blockiert oder ein Absenken des Bedienelements (12) zum Verformen der Schnappscheibe (16) ermöglicht wird;
- eine Erfassungseinrichtung (22) zum Erfassen einer Berührposition eines Fingers am Bedienelement (12);
eine Steuereinrichtung (24), welche dazu eingerichtet ist, eine Spannung am Blockierkörper in Abhängigkeit von der erfassten Berührposition des Fingers einzustellen,
**dadurch gekennzeichnet,**
**dass** der Blockierkörper (18) aus einem elektroaktiven Polymer ist, dessen Form in Abhängigkeit von einer angelegten elektrischen Spannung so veränderbar ist, dass ein Absenken des Bedienelements (12) blockiert oder ein Absenken des Bedienelements (12) zum Verformen der Schnappscheibe (16) ermöglicht wird, wobei das Bedienelement (12) wenigstens zwei Symbole aufweist, wobei die Steuereinrichtung (24) dazu eingerichtet ist, die Spannung oszillierend dem Blockierkörper (18) aufzuprägen, um das Bedienelement (12) in Vibrationen zu versetzen, wenn erfasst wird, dass der Finger zwischen den Symbolen angeordnet ist.

2. Bedienvorrichtung (10) nach Anspruch 1,
**dadurch gekennzeichnet, dass**
die Form des Blockierkörpers (18) bei einer angelegten Spannung das Absenken des Bedienelements (12) zum Verformen der Schnappscheibe (16) ermöglicht und bei nicht angelegter Spannung das Absenken des Bedienelements (12) blockiert.

3. Bedienvorrichtung (10) nach Anspruch 1 oder 2,
**dadurch gekennzeichnet, dass**
das Bedienelement (12) zumindest ein Symbol aufweist, wobei die Steuereinrichtung (24) dazu eingerichtet ist, die Spannung nur dann zum Ermöglichen des Absenkens des Bedienelements (12) entsprechend einzustellen, wenn der Finger das Symbol berührt.

4. Bedienvorrichtung (10) nach einem der vorhergehenden Ansprüche,
**dadurch gekennzeichnet, dass**
die Erfassungseinrichtung (22) dazu ausgelegt ist, die Berührposition des Fingers am Bedienelement (12) kapazitiv zu erfassen.

5. Bedienvorrichtung (10) nach einem der vorhergehenden Ansprüche,
**dadurch gekennzeichnet, dass**
die Erfassungseinrichtung (22) neben dem Blockierkörper (18) zwei weitere solcher Blockierkörper (18) aufweist, wobei alle drei Blockierkörper (18) bei nicht aufgeprägter Spannung unterseitig am Bedienelement (12) anliegen und bei einer Kraftausübung auf das Bedienelement(12) eine Spannung erzeugen, wobei die Steuereinrichtung (24) dazu eingerichtet ist, anhand der erzeugten Spannungen mittels einer Triangulation die Berührposition des Fingers am Bedienelement (12) zu erfassen.

6. Bedienvorrichtung (10) nach einem der vorhergehenden Ansprüche,
**dadurch gekennzeichnet, dass**
der Blockierkörper (18) einen elastischen und elektrisch isolierenden Silikonkörper aufweist, welcher zwischen zwei als Elektroden dienenden elektrisch leitenden Silikonelastormerschichten angeordnet ist.

7. Kraftfahrzeug mit einer Bedienvorrichtung (10) nach einem der vorhergehenden Ansprüche.

8. Verfahren zum Betreiben einer Bedienvorrichtung (10) nach einem der Ansprüche 1 bis 6, bei welchem mittels der Steuereinrichtung (24) eine Spannung am Blockierkörper (18) aus einem elektroaktiven Polymer in Abhängigkeit von einer mittels der Erfassungseinrichtung (22) erfassten Berührposition des Fingers eingestellt wird, um durch Änderung der Form des Blockierkörpers (18) in Abhängigkeit der angelegten elektrischen Spannung ein Absenken des Bedienelements (12) zu blockieren oder ein Absenken des Bedienelements(12) zum Verformen der Schnappscheibe (16) zu ermöglichen, wobei das Bedienelement (12) wenigstens zwei Symbole aufweist, wobei die Steuereinrichtung (24) die Spannung oszillierend dem Blockierkörper (18) aufprägt, um das Bedienelement (12) in Vibrationen zu versetzen, wenn erfasst wird, dass der Finger zwischen den Symbolen angeordnet ist.

## Claims

1. Operating device (10) for a motor vehicle, comprising:
- an operating element (12) which can be lowered via an exertion of force;
- a snap disk (16) arranged under the operating element (12) for exerting a haptic feedback to the operating element (12) if the snap disk (16) is deformed by lowering of the operating element (12);
- a blocking body (18) arranged below the operating element (12) and next to the snap disk (16), which blocking body (18) can be modified as a function of an applied electrical voltage such that a lowering of the operating element (12) is blocked or a lowering of the operating element (12) to deform the snap disk (16) is enabled;
- a detecting device (22) for detecting a contact position of a finger on the operating element (12);
a control device (24) which is configured to adjust a voltage at the blocking body as a function of the detected contact position of the finger,
**characterized in that**
the blocking body (18) is made of an electroactive polymer whose shape can be changed as a function of an applied electrical voltage in such a way that a lowering of the operating element (12) is blocked or a lowering of the operating element (12) to deform the snap disk (16) is enabled, wherein the operating element (12) has a least two symbols, wherein the control device (24) is configured to impress the voltage in an oscillating manner at the blocking body (18) in order to cause the operating element (12) to vibrate if it is detected that the finger is arranged between the symbols.

2. Operating device (10) according to claim 1,
**characterized in that**
the shape of the blocking body (18) given an applied voltage enables the lowering of the operating element (12) to deform the snap disk (16), and blocks the lowering of the operating element (12) if the voltage is not applied.

3. Operating device (10) according to claim 1 or 2,
**characterized in that**
the operating element (12) has at least one symbol, wherein the control device (24) is configured to adjust the voltage accordingly to enable the lowering of the operating element (12) only when the finger touches the symbol.

4. Operating device (10) according to any of the preceding claims,
**characterized in that**
the detection device (22) is designed to capacitively detect the contact position of the finger on the operating element (12).

5. Operating device (10) according to any of the preceding claims,
**characterized in that**
the detection device (22) has, in addition to the blocking body (18), two additional such blocking bodies (18), wherein all three blocking bodies (18) bear against the underside of the operating element (12) when the voltage is not impressed and generate a voltage when force is exerted on the operating element (12), wherein the control device (24) is configured to detect the contact position of the finger on the operating element (12) by means of triangulation, using the generated voltage.

6. Operating device (10) according to any of the preceding claims, **characterized in that**
the blocking body (18) has an elastic and electrically insulating silicone body which is arranged between two electrically conductive silicone elastomer layers serving as electrodes.

7. Motor vehicle having an operating device (10) according to any of the preceding claims.

8. Method for operating an operating device (10) according to any of claims 1 to 6, in which, by means of the control device (24), a voltage at the blocking body (18) made of an electroactive polymer is adjusted as a function of a contact position of the finger, detected by means of the detection device (22), in order to block a lowering of the operating element (12) as a function of the applied electric voltage by changing the shape of the blocking body (18), or to enable a lowering of the operating element (12) to deform the snap disk (16), wherein the operating element (12) has at least two icons, wherein the control device (24) impresses the voltage in an oscillating manner at the blocking body (18) in order to cause the operating element (12) to vibrate if it is detected that the finger is arranged between the icons.

## Revendications

1. Dispositif de commande (10) pour un véhicule automobile, comprenant :
- un élément de commande (12), lequel, par application d'une force, peut être abaissé ;
- un disque à déclic (16) disposé sous l'élément de commande (12) pour appliquer une rétroaction haptique à l'élément de commande (12) lorsque le disque à déclic (16) est déformé par abaissement de l'élément de commande (12) ;
- un corps de blocage (18) disposé sous l'élément de commande (12) et à côté du disque à déclic (16), lequel peut être modifié en fonction d'une tension électrique appliquée de telle sorte qu'un abaissement de l'élément de commande (12) bloque ou un abaissement de l'élément de commande (12) permet de déformer le disque à déclic (16) ;
- un dispositif de détection (22) pour détecter une position tactile d'un doigt sur l'élément de commande (12) ;
un agencement de commande (24), lequel est conçu pour régler une tension sur le corps de blocage en fonction de la position tactile détectée du doigt,
**caractérisé en ce**
**que** le corps de blocage (18) est en polymère électroactif dont la forme peut être modifiée en fonction d'une tension électrique appliquée de telle sorte qu'un abaissement de l'élément de commande (12) bloque ou un abaissement de l'élément de commande (12) permet de déformer le disque à déclic (16), dans lequel l'élément de commande (12) comporte au moins deux symboles, dans lequel l'agencement de commande (24) est conçu pour appliquer la tension au corps de blocage (18) de manière oscillante pour mettre l'élément de commande (12) en vibration lorsqu'il est détecté que le doigt est disposé entre les symboles.

2. Dispositif de commande (10) selon la revendication 1,
**caractérisé en ce que**
la forme du corps de blocage (18), lorsqu'une tension est appliquée, permet l'abaissement de l'élément de commande (12) pour déformer le disque à déclic (16) et, lorsque la tension n'est pas appliquée, bloque l'abaissement de l'élément de commande (12).

3. Dispositif de commande (10) selon la revendication 1 ou 2,
**caractérisé en ce que**
l'élément de commande (12) comporte au moins un symbole, dans lequel l'agencement de commande (24) est conçu pour régler de manière correspondante la tension uniquement pour permettre l'abaissement de l'élément de commande (12) lorsque le doigt touche le symbole.

4. Dispositif de commande (10) selon l'une quelconque des revendications précédentes,
**caractérisé en ce que**
le dispositif de détection (22) est conçu pour détecter de manière capacitive la position tactile du doigt sur l'élément de commande (12).

5. Dispositif de commande (10) selon l'une quelconque des revendications précédentes,
**caractérisé en ce que**
le dispositif de détection (22) comporte, en plus du corps de blocage (18), deux autres corps de blocage (18), dans lequel les trois corps de blocage (18), lorsque la tension n'est pas appliquée, reposent tous sur une face inférieure de l'élément de commande (12) et, lorsqu'une force est appliquée à l'élément de commande (12), génèrent une tension, dans lequel l'agencement de commande (24) est conçu pour détecter, en fonction des tensions générées, au moyen d'une triangulation, la position tactile du doigt sur l'élément de commande (12).

6. Dispositif de commande (10) selon l'une quelconque des revendications précédentes,
**caractérisé en ce que**
le corps de blocage (18) comporte un corps en silicone élastique et électriquement isolant, lequel est disposé entre deux couches d'élastomère de silicone électriquement conductrices servant d'électrodes.

7. Véhicule automobile doté d'un dispositif de commande (10) selon l'une quelconque des revendications précédentes.

8. Procédé de fonctionnement d'un dispositif de commande (10) selon l'une quelconque des revendications 1 à 6, selon lequel, au moyen de l'agencement de commande (24), une tension est réglée sur le corps de blocage (18) en polymère électroactif en fonction d'une position tactile du doigt détectée par le dispositif de détection (22) afin de, par changement de la forme du corps de blocage (18) en fonction de la tension électrique appliquée, bloquer l'abaissement de l'élément de commande (12) ou pour permettre l'abaissement de l'élément de commande (12) pour déformer le disque à déclic (16), dans lequel l'élément de commande (12) comporte au moins deux symboles, dans lequel l'agencement de commande (24) applique la tension d'une manière oscillante au corps de blocage (18) pour mettre l'élément de commande (12) en vibration lorsqu'il est détecté que le doigt est disposé entre les symboles.
